(19) Europäisches Patentamt
European Patent Office
Office européen des brevets

(11) **EP 4 660 972 A1**

(12) **EUROPEAN PATENT APPLICATION**

(43) Date of publication:
**10.12.2025 Bulletin 2025/50**

(21) Application number: **25163156.0**

(22) Date of filing: **12.03.2025**

(51) International Patent Classification (IPC):
**G06V 20/58** (2022.01)    **G06V 10/24** (2022.01)
**G06V 10/94** (2022.01)    **B60R 1/27** (2022.01)

(52) Cooperative Patent Classification (CPC):
**G06V 20/586; B60R 1/27; B62D 15/027;
B62D 15/028; G06V 10/247; G06V 10/248;
G06V 10/945;** B60R 2300/607; B60R 2300/806

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.06.2024 KR 20240072459**

(71) Applicant: **Hyundai Mobis Co., Ltd.
Gangnam-gu
Seoul 06141 (KR)**

(72) Inventor: **YUN, Yeo Min
16891 Yongin-si, Gyeonggi-do (KR)**

(74) Representative: **Jung, Minkyu
Wuesthoff & Wuesthoff
Patentanwälte und Rechtsanwalt PartG mbB
Schweigerstraße 2
81541 München (DE)**

(54) **PARKING ASSISTANCE APPARATUS AND METHOD**

(57)    Provided is a parking assistance apparatus and method. The parking assistance apparatus includes a display unit, a camera configured to capture surroundings of a vehicle, a traveling signal input unit configured to input a traveling signal of the vehicle, and a processor configured to generate a surround view monitor (SVM) image based on the image captured by the camera, to fix the SVM image to one viewpoint centered on a preset parking space, and to move a vehicle model within the SVM image with the viewpoint fixed.

**Description**

**BACKGROUND**

FIELD

Exemplary embodiments of the present disclosure relate to a parking assistance apparatus and method.

DISCUSSION OF THE BACKGROUND

Various advanced electronic technologies are being applied to vehicles in order to improve vehicle safety and driver convenience.

Among the advanced electronic technologies, there is a surround view monitor (SVM) system that displays top view or around view images to a driver so that the driver may conveniently check the surrounding environment of a vehicle through the naked eye by taking and displaying the surrounding environment of the vehicle.

The SVM system captures the surrounding environment through cameras installed on the front, rear, left, and right sides of the vehicle, and displays the surrounding environment of the vehicle on a screen by correcting an overlapping area to be naturally seen on the basis of the captured images. Accordingly, the driver may accurately recognize the surrounding environment of the vehicle through the displayed surrounding environment, and conveniently park or travel without seeing side mirrors or a rearview mirror.

However, the SVM system has the inconvenience of requiring a user to directly change a viewpoint when a vehicle model obscures the background or parks the vehicle in a parking space.

**SUMMARY**

The present disclosure has been made to solve the above problems, and an object according to one aspect of the present disclosure is to provide a parking assistance apparatus and method that allow a user to easily ascertain the surrounding environment of a parking space and to conveniently park a vehicle without a separate operation.

A parking assistance apparatus in accordance with an aspect of the present disclosure includes: a display unit; a camera configured to capture surroundings of a vehicle; a traveling signal input unit configured to input a traveling signal of the vehicle; and a processor configured to generate a surround view monitor (SVM) image based on the image captured by the camera, to fix the SVM image to one viewpoint centered on a preset parking space, and to move a vehicle model within the SVM image with the viewpoint fixed.

The processor of the present disclosure analyzes the SVM image to recognize parking space candidates, and receives a user's selection of any one of the recognized parking space candidates.

The processor of the present disclosure displays the parking space candidate within the SVM image and receives the parking space by touch through the display unit.

The processor of the present disclosure places the parking space at a bottom center of the SVM image with the viewpoint fixed.

The processor of the present disclosure moves the vehicle model according to an actual traveling signal of the vehicle within the SVM image with the viewpoint fixed.

The traveling signal of the present disclosure includes at least one of a shift stage signal, a wheel signal, and a steering angle signal of the vehicle.

The processor of the present disclosure sets a traveling direction based on the shift stage signal, calculates a movement distance by using the wheel signal, calculates a rotation angle by using the steering angle signal, and moves the vehicle model according to the traveling direction, the movement distance, and the rotation angle.

A parking assistance method in accordance with an aspect of the present disclosure includes: generating, by a processor, a surround view monitor (SVM) image based on an image captured by a camera; fixing, by the processor, the SVM image to one viewpoint centered on a preset parking space; and moving, by the processor, a vehicle model within the SVM image with the viewpoint fixed.

In the generating of the SVM image of the present disclosure, the processor analyzes the SVM image to recognize parking space candidates, and receives a user's selection of any one of the recognized parking space candidates.

In the generating of the SVM image of the present disclosure, the processor places the parking space at a bottom center of the SVM image with the viewpoint fixed.

A parking assistance apparatus and method in accordance with an aspect of the present disclosure allow a user to easily ascertain the surrounding environment of a parking space and to conveniently park a vehicle without a separate operation.

## BRIEF DESCRIPTION OF THE DRAWINGS

FIG. 1 is a block configuration of a parking assistance apparatus in accordance with an embodiment of the present disclosure.

FIG. 2 is a parking space search image in accordance with an embodiment of the present disclosure.

FIG. 3 is an image in which a viewpoint is changed and fixed to a parking space selected by a user in accordance with an embodiment of the present disclosure.

FIGS. 4 to 6 are images in which the movement of a vehicle model is displayed according to the actual movement of a vehicle in accordance with an embodiment of the present disclosure.

FIG. 7 is an image in which parking is completed and a viewpoint is changed to a vehicle-centered view in accordance with an embodiment of the present disclosure.

FIG. 8 is an image showing a parking space candidate in accordance with an embodiment of the present disclosure.

FIG. 9 is an image in which a viewpoint is changed centered on a selected parking space in accordance with an embodiment of the present disclosure.

FIGS. 10 and 11 are diagrams illustrating a method for changing a viewpoint centered on a parking space by using a homography transformation in accordance with an embodiment of the present disclosure.

FIG. 12 is a diagram illustrating a method for changing a viewpoint centered on a parking space by using a viewpoint transformation matrix in accordance with an embodiment of the present disclosure.

FIG. 13 is a vehicle model starting point designation image in accordance with an embodiment of the present disclosure.

FIG. 14 is an image showing a vehicle model movement in accordance with an embodiment of the present disclosure.

FIGS. 15 and 16 are images showing completion of parking and restoration of a viewpoint in accordance with an embodiment of the present disclosure.

FIGS. 17 and 18 are images showing filling of a bottom surface in accordance with an embodiment of the present disclosure.

FIG. 19 is a flowchart of a parking assistance method in accordance with an embodiment of the present disclosure.

## DETAILED DESCRIPTION OF THE ILLUSTRATED EMBODIMENTS

Hereinafter, a parking assistance apparatus and method in accordance with the present disclosure are described with reference to the accompanying drawings through various exemplary embodiments. In such a process, the thicknesses of lines or the sizes of elements illustrated in the drawings may be exaggerated for the purpose of clarity and convenience of explanation. Furthermore, terms to be described below are terms defined in consideration of functions thereof in the present disclosure and may be changed according to the intention of a user or an operator, or practice. Accordingly, such terms should be defined based on the disclosure over the present specification.

The present disclosure may be implemented in various different forms and is not limited to embodiments described below. In order to clearly explain the present disclosure in the drawings, parts not related to the description are omitted, and similar parts are assigned similar reference numerals throughout the specification.

Throughout the specification, when a certain element "includes" a component, it means that the element does not exclude another component but may further include another component unless referred to the contrary.

The implementations described in the present specification may be implemented as a method or process, an apparatus, a software program, a data stream, or signal, for example. Although discussed only in the context of a single form of implementation (for example, discussed only as a method), the discussed features may also be implemented as other forms (for example, an apparatus or a program). The apparatus may be implemented as appropriate hardware, software, firmware and the like. The method may be implemented in an apparatus such as a processor generally referring to a processing device including a computer, a microprocessor, an integrated circuit, or a programmable logic device.

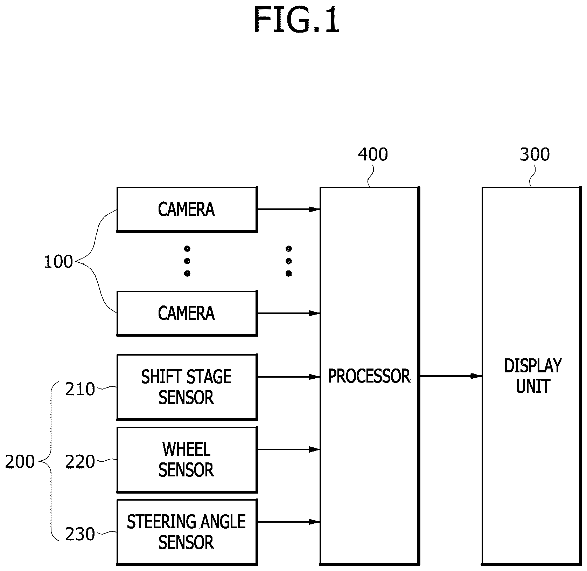

FIG. 1 is a block configuration of a parking assistance apparatus in accordance with an embodiment of the present disclosure.

Referring to FIG. 1, a parking assistance apparatus in accordance with an embodiment of the present disclosure may include a camera 100, a traveling signal input unit 200, a display unit 300, and a processor 400.

The camera 100 may be a surround view monitor (SVM) camera 100 that captures the surroundings of a vehicle.

A plurality of cameras 100 may be mounted on the vehicle, and may be installed at various locations including the front, rear, left, and right sides of the vehicle.

The camera 100 may capture a background image of an area in front of the vehicle, a background image of an area behind the vehicle, a background image of an area on the left side of the vehicle, and a background image of an area on the right side of the vehicle. Based on this, an SVM image in which the background image of the area in front of the vehicle, the background image of the area behind the vehicle, the background image of the area on the left side of the vehicle, and the background image of the area on the right side of the vehicle are aligned may be generated.

The traveling signal input unit 200 may input a traveling signal according to the traveling of the vehicle.

The traveling signal input unit 200 may include a shift stage sensor 210, a wheel sensor 220, and a steering angle sensor 230.

The shift stage sensor 210 may input a shift stage signal of the vehicle, for example, one of P, R, N, and D, to the processor 400. The shift stage sensor 210 may detect the position of a shift lever shifted so that one of a plurality of shift stages P, R, N, and D is selected by a user's operation.

The wheel sensor 220 may detect a wheel signal of the vehicle and input the detected wheel signal to the processor 400. For example, the wheel sensor 220 may detect a wheel speed or a wheel rotation number and input the detected wheel speed or wheel rotation number to the processor 400.

The steering angle sensor 230 may be installed on a steering shaft to detect a steering angle of a steering wheel of the vehicle.

The present embodiment describes that the traveling signal includes a shift stage signal of the vehicle, a wheel signal, and a steering angle signal, but the traveling signal is not particularly limited.

The display unit 300 may recognize a touch of a user's finger or pen on a display panel and perform processing based on the recognized touch. For example, the display unit 300 may sense the user's touch by using a plurality of touch electrodes disposed on the display panel or built into the display panel.

The display panel may be implemented with a thin film transistor-liquid crystal display (TFT-LCD) panel, a light emitting diode (LED) panel, an organic LED (OLED) panel, an active matrix OLED (AMOLED) panel, or a flexible panel.

The display unit 300 may be installed in a cluster of the vehicle or installed on a dashboard on the front of the vehicle's interior.

The display unit 300 may receive an SVM image from the processor 400 and display the SVM image to the user. For example, the display unit 300 may display an image of the surroundings of the vehicle or display a parking space candidate. The display unit 300 may display an SVM image at a viewpoint centered on a selected parking space. The display unit 300 may display a vehicle model (3D vehicle model) according to the actual traveling state of the vehicle.

The display unit 300 may receive a parking space selected by the user from the SVM image displaying the parking space candidate and input the selected parking space to the processor 400.

The processor 400 may be connected to a memory (not illustrated), and the memory may store instructions for performing operations, steps, and the like in accordance with an embodiment of the present disclosure. The memory may include magnetic storage media or flash storage media in addition to a volatile storage device that requires power in order to maintain stored information, but the scope of the present disclosure is not limited thereto.

In addition, the processor 400 may be configured by separating configurations for performing respectively functions at a hardware, software, or logic level. In such a case, dedicated hardware may be used to perform each function. To this end, the processor 400 may be implemented with at least one of an application specific integrated circuit (ASIC), a digital signal processor (DSP), programmable logic devices (PLDs), field programmable gate arrays (FPGAs), a central processing unit (CPU), microcontrollers, and/or microprocessors, or may include at least one thereof.

The processor 400 may be implemented with a central processing unit (CPU) or a system on chip (SoC), and may control a plurality of hardware or software components connected to the processor 400 by driving an operating system or an application and perform various data processing and arithmetic operations. The processor 400 may be configured to execute at least one command stored in the memory and store the execution result data in the memory.

The memory (not illustrated) may store various data used by the processor 400. The data may store commands for performing operations, steps, or the like in accordance with embodiments of the present disclosure. That is, the memory may store commands for generating an SVM image, generating a parking image with a fixed viewpoint centered on a parking space in the SVM image, displaying the parking image, and moving a vehicle model within the parking image.

The memory may include at least one storage medium among a flash memory type memory, a hard disk type memory, a multimedia card micro type memory, a card type memory, a random access memory (RAM), a static random access memory (ROM), a read-only memory (ROM), a programmable read-only memory (PROM), an erasable programmable read-only memory (EPROM), and an electrically erasable programmable read-only memory (EEPROM).

The processor 400 may receive, from the camera 100, the background image of the area in front of the vehicle, the background image of the area behind the vehicle, the background image of the area on the left side of the vehicle, and the background image of the area on the right side of the vehicle.

The processor 400 may generate an SVM image by synthesizing the background image of the area in front of the vehicle, the background image of the area behind the vehicle, the background image of the area on the left side of the vehicle, and the background image of the area on the right side of the vehicle. The processor 400 may display the generated SVM image through the display unit 300.

The processor 400 may analyze the SVM image to search for parking space candidates.

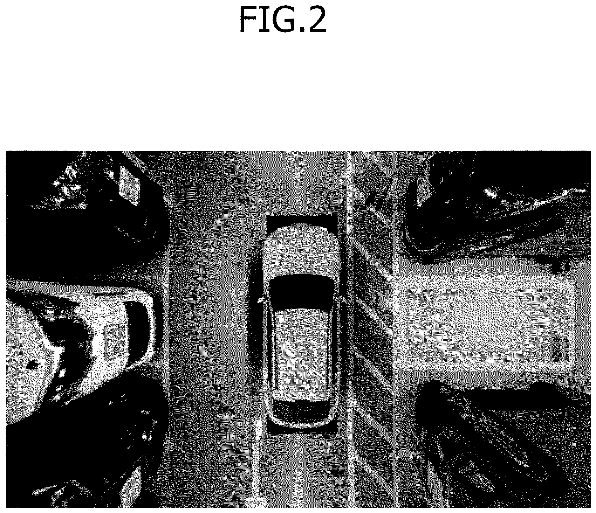

FIG. 2 is a parking space search image in accordance with an embodiment of the present disclosure.

As illustrated in FIG. 2, the processor 400 may search for a parking space and display the searched parking space so that the user may select the parking space.

The processor 400 may receive a user's selection of any one of the parking space candidates through the display unit 300.

The processor 400 may generate an SVM image with a viewpoint fixed centered on the parking space selected by the user, and display the SVM image through the display unit 300.

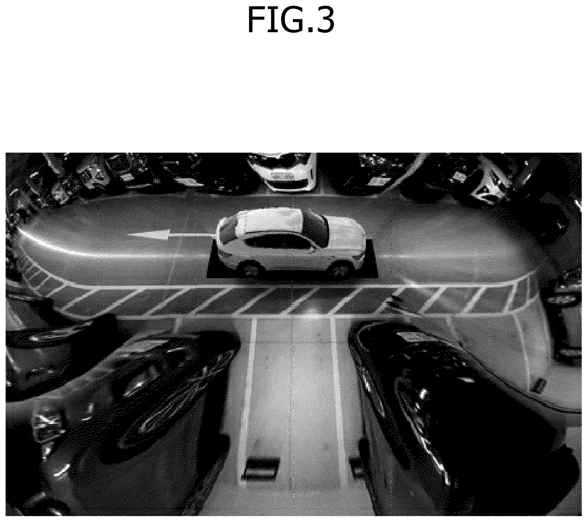

FIG. 3 is an image in which a viewpoint is changed and fixed to a parking space selected by the user in accordance with an embodiment of the present disclosure.

As illustrated in FIG. 3, the processor 400 may change the viewpoint of the SVM image centered on the parking space selected by the user. The processor 400 may fix the SVM image with the viewpoint changed.

Subsequently, when the user drives the vehicle, the traveling signal input unit 200 may input a traveling signal to the processor 400.

The processor 400 may move the vehicle model in the parking image according to the traveling signal input from the traveling signal input unit 200.

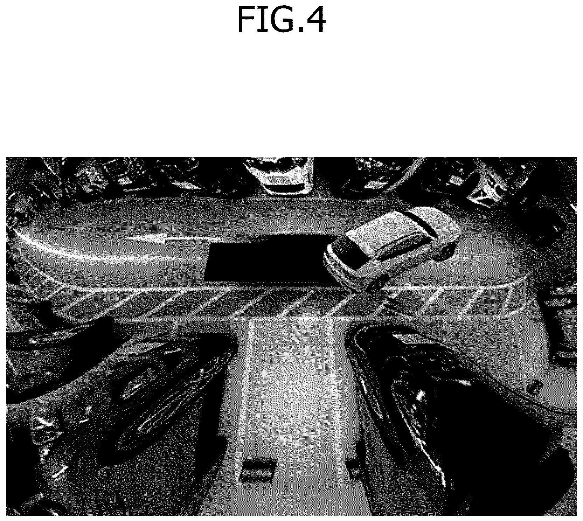

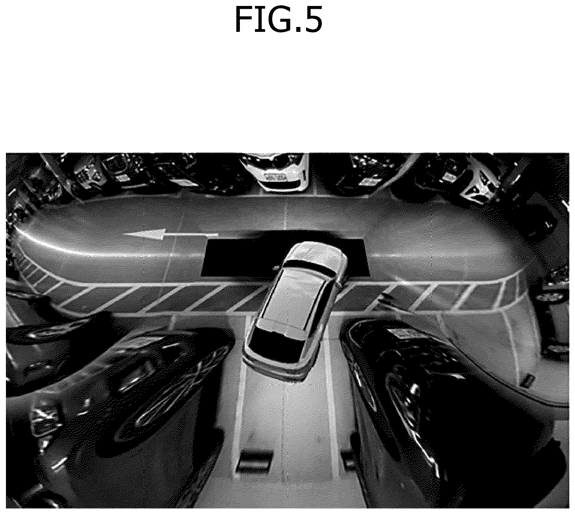

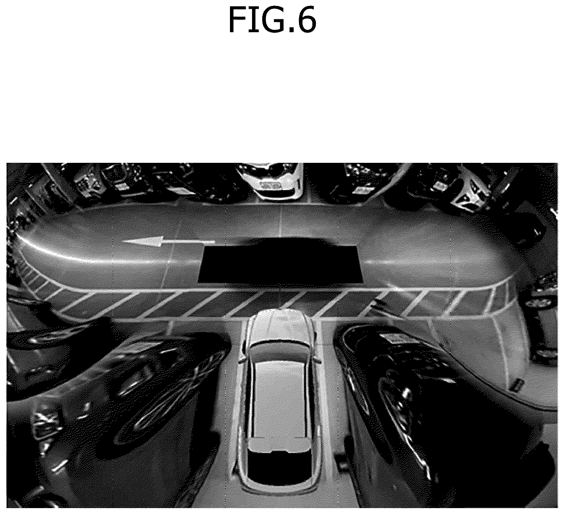

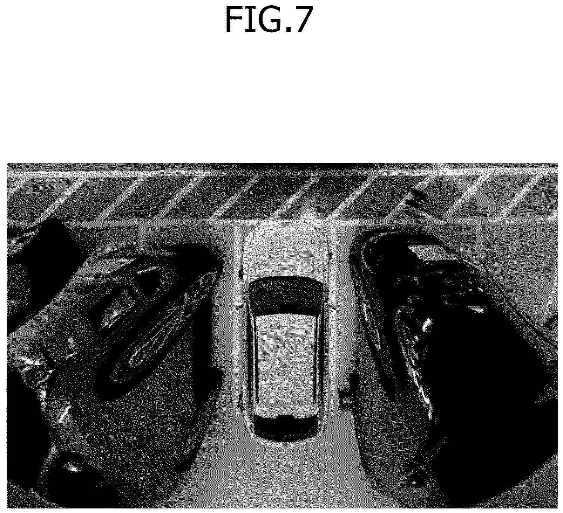

FIGS. 4 to 6 are images in which the movement of the vehicle model is displayed according to the actual movement of the vehicle in accordance with an embodiment of the present disclosure, and FIG. 7 is an image in which parking is completed and a viewpoint is changed to a vehicle-centered view in accordance with an embodiment of the present disclosure.

Referring to FIGS. 4 to 6, the processor 400 may move the vehicle model according to a shift stage signal, a wheel signal, and a steering angle signal of the vehicle from the initial position of the vehicle.

Subsequently, when parking is completed, the processor 400 may change the SVM image to a vehicle-centered view as illustrated in FIG. 7.

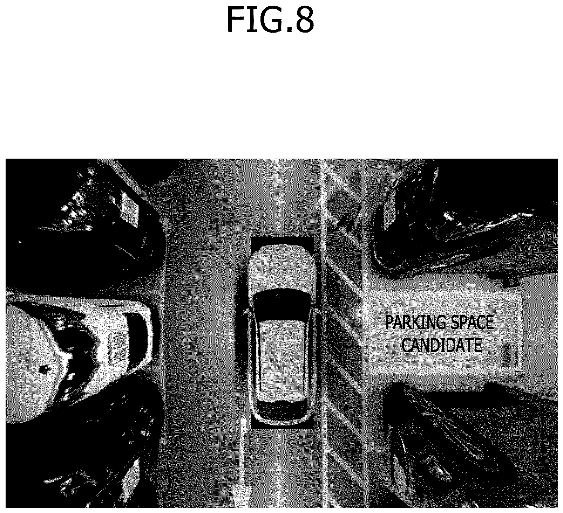

The following is described in detail with reference to FIGS. 8 to 16.

First, the processor 400 may generate an SVM image by synthesizing the background image of the area in front of the vehicle, the background image of the area behind the vehicle, the background image of the area on the left side of the vehicle, and the background image of the area on the right side of the vehicle. The processor 400 may display the generated SVM image through the display unit 300.

The processor 400 may analyze the SVM image to search for a parking area candidate and display the searched parking area candidate through the display unit 300.

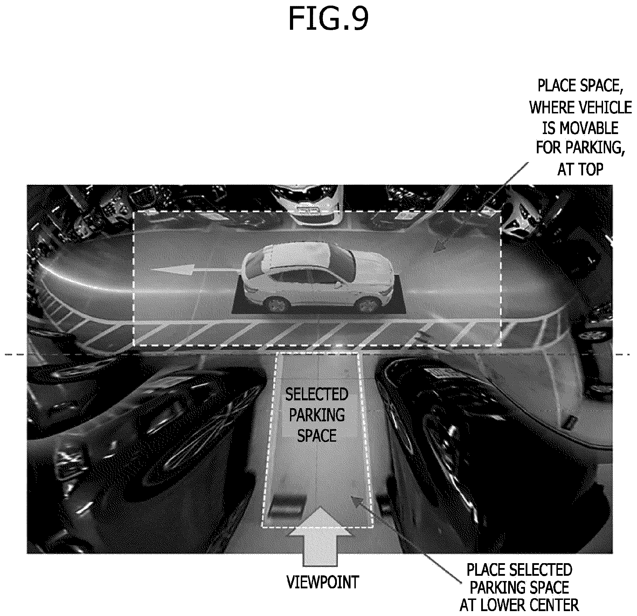

FIG. 8 is an image showing a parking space candidate in accordance with an embodiment of the present disclosure, and FIG. 9 is an image in which a viewpoint is changed centered on a selected parking space in accordance with an embodiment of the present disclosure.

As illustrated in FIG. 8, as the parking space candidate is displayed, the user may select the parking space candidate through the display unit 300.

The processor 400 may display the SVM image with a viewpoint centered on the selected parking space candidate.

Referring to FIG. 9, the processor 400 may change the viewpoint of the SVM image so that the user may conveniently view the parking space selected by the user. The processor 400 may place the viewpoint from which the user views the parking area, that is, the parking space, at the bottom center of the SVM image and fix the viewpoint. The processor 400 may place a space, where a vehicle may move for parking, at the top of the SVM image.

The processor 400 may change the viewpoint by changing a world coordinate of the parking space to the viewpoint centered on the parking space. To this end, rotation transformation and translation transformation are required. Accordingly, the processor 400 may adjust a viewpoint transformation matrix or use homography.

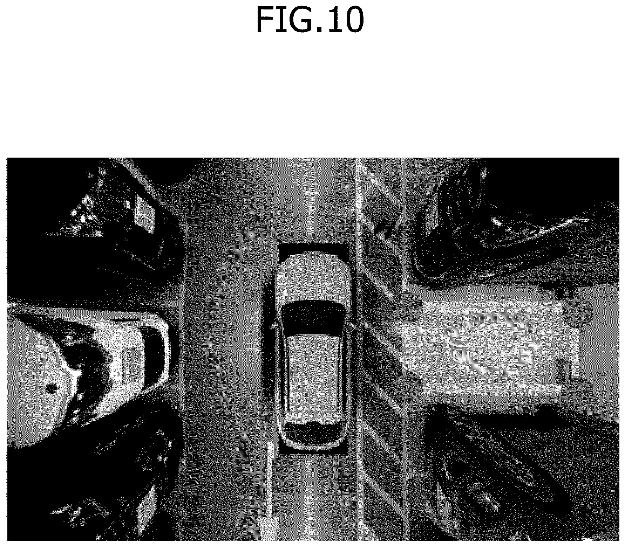

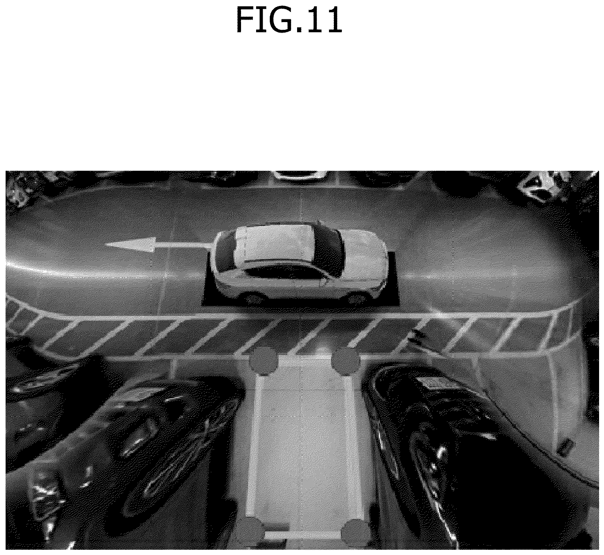

FIGS. 10 and 11 are diagrams illustrating a method for changing a viewpoint centered on a parking space by using a homography transformation in accordance with an embodiment of the present disclosure.

In the case of a method using a homography, the coordinates of four corner points of a selected parking space rectangle may be known, and the coordinates of four points of a rectangle to be finally transformed may be defined in advance. Accordingly, the processor 400 may calculate the homography as in the following Equation 1.

## Equation 1

$$s \begin{bmatrix} x' \\ y' \\ 1 \end{bmatrix} = H \begin{bmatrix} x \\ y \\ 1 \end{bmatrix} = K \begin{bmatrix} r_1 & r_2 & t \end{bmatrix} \begin{bmatrix} x \\ y \\ 1 \end{bmatrix}$$

In Equation 1 above, H denotes a homography, K denotes an internal parameter of the camera 100, r denotes a rotation transformation matrix element, t denotes a translation transformation matrix element, x and y denote coordinates before transformation, and x' and y' denote coordinates after transformation.

When Equation 1 above is applied, transformation may be performed as in the images illustrated in FIGS. 10 and 11.

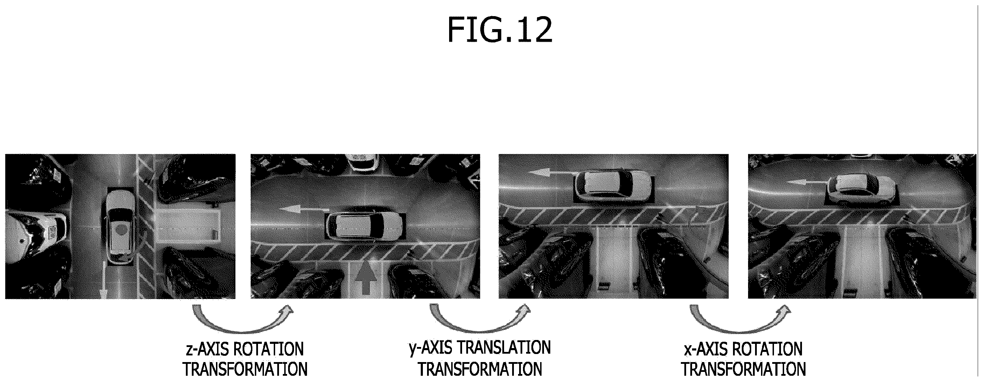

FIG. 12 is a diagram illustrating a method for changing a viewpoint centered on a parking space by using a viewpoint transformation matrix in accordance with an embodiment of the present disclosure.

In the case of a method using a view transformation matrix, the processor 400 may apply rotation and translation (R|T) transformation to a view transformation (View Matrix, $M_{view}$) matrix of the following Equation 2 in order to change a viewpoint to a parking space-centered viewpoint.

$$\text{Equation 2}$$

$$\begin{bmatrix} x' \\ y' \\ z' \\ w' \end{bmatrix} = M_{pers} \cdot M_{view} \cdot \begin{bmatrix} x \\ y \\ z \\ 1 \end{bmatrix}, M_{view} = RT$$

In Equation 2 above, $M_{pers}$ denotes perspective transformation, $M_{view}$ denotes viewpoint transformation, R denotes a rotation transformation matrix, T denotes a translation transformation matrix, x, y, z, and w denote coordinates before transformation, and x', y', z', and w' denote coordinates after transformation.

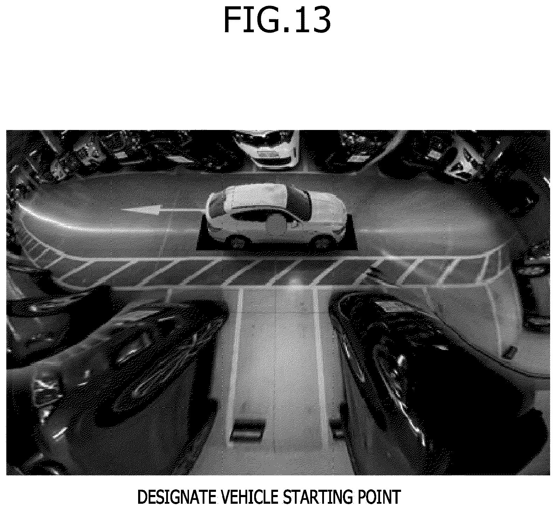

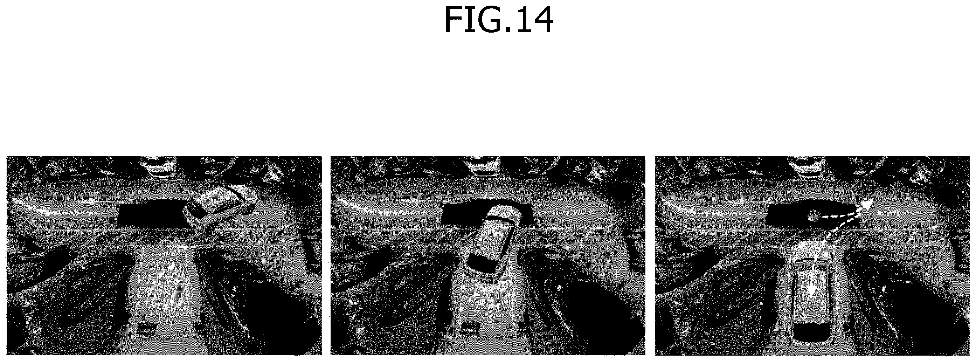

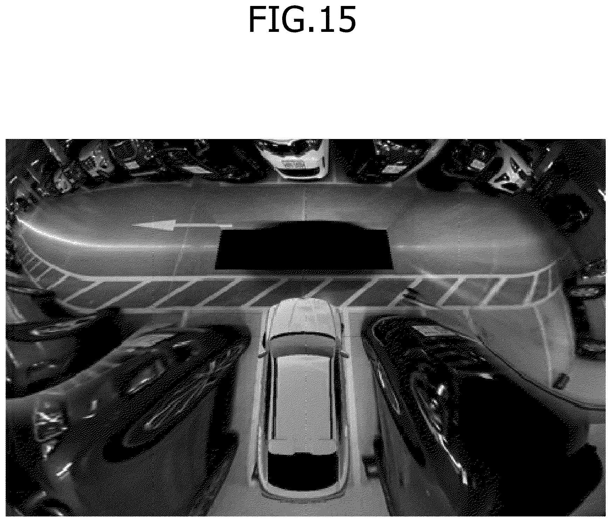

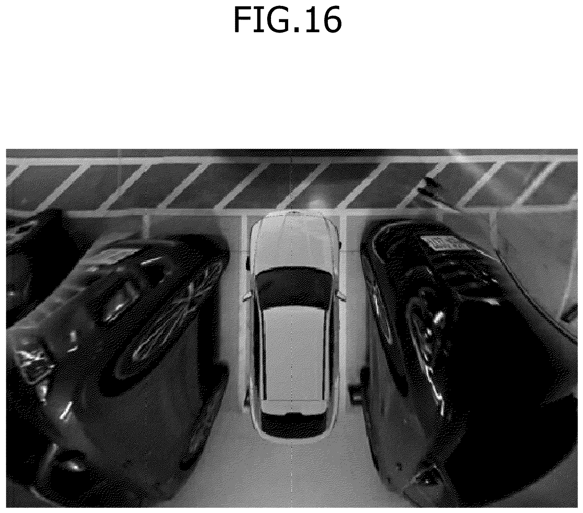

FIG. 13 is a vehicle model starting point designation image in accordance with an embodiment of the present disclosure, FIG. 14 is an image showing a vehicle model movement in accordance with an embodiment of the present disclosure, and FIGS. 15 and 16 are images showing completion of parking and restoration of a viewpoint in accordance with an embodiment of the present disclosure.

Referring to FIGS. 13 to 16, the processor 400 may fix the SVM image to the viewpoint centered on the parking space selected by the user and then move the vehicle model within the SVM image according to the traveling signal of the vehicle. Accordingly, the vehicle model moves in the same way as the actual vehicle.

To this end, the processor 400 may first receive a shift stage signal, a wheel signal, and a steering angle signal.

The processor 400 may calculate the current position of the vehicle in world coordinates by using the shift stage signal, the wheel signal, and the steering angle signal, and move the vehicle model by the calculated value.

More specifically, the processor 400 may update only coordinates related to the vehicle model by rotating and translating the coordinates, as in the following Equation 3.

The processor 400 may calculate the distance the vehicle has moved by using the wheel speed or wheel rotation number signal of the vehicle. The processor 400 may calculate the rotation angle of the wheel through a signal of the steering angle sensor 230. The processor 400 may recognize the forward/reverse direction through a shift stage signal.

The processor 400 may move the vehicle model as much as the distance the actual vehicle has moved by rotating and translating the world coordinates of the vehicle model as much as the vehicle signal described above.

$$\text{Equation 3}$$

$$\begin{bmatrix} x' \\ y' \\ z' \\ w' \end{bmatrix} = [R|T] \cdot \begin{bmatrix} x_{car} \\ y_{car} \\ z_{car} \\ 1 \end{bmatrix}$$

In Equation 3 above, $x_{car}$, $y_{car}$, and $z_{car}$ denote coordinates of the actual vehicle, x', y', z', and w' denote coordinates of the vehicle model, R denotes a rotation transformation matrix, and T denotes a translation transformation matrix.

Subsequently, the processor 400 may determine that parking has been completed based on whether the vehicle model is located in the parking space.

When it is determined that the vehicle model is located in the parking space, the processor 400 may terminate a SVM mode centered on the parking space.

When the SVM mode centered on the parking space is terminated, the processor 400 may restore the vehicle model to an initial position as illustrated in FIGS. 15 and 16 and switch back to the viewpoint centered on the vehicle model. In such a case, the processor 400 may remember a viewpoint matrix and vehicle model coordinates initially used before the corresponding function is performed, and then switch to an initial view by using the remembered matrix when the function is terminated.

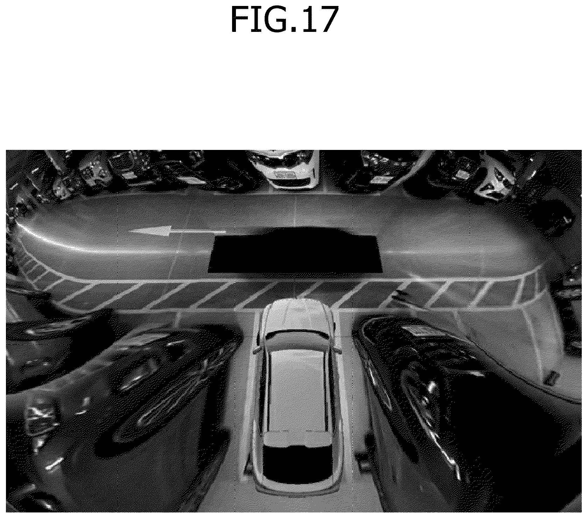

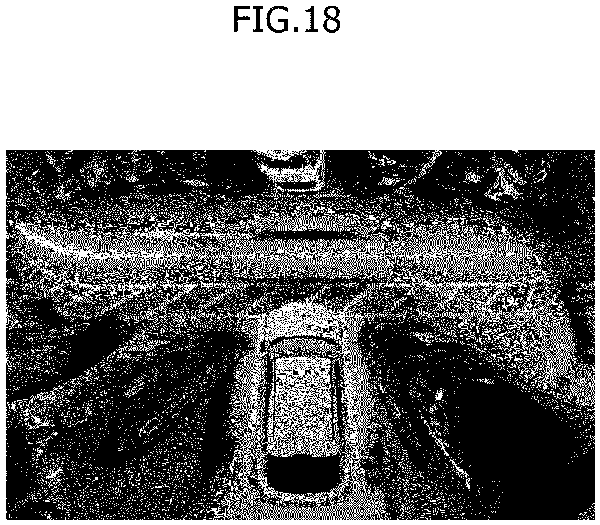

FIGS. 17 and 18 are images showing filling of a bottom surface in accordance with an embodiment of the present disclosure.

As illustrated in FIGS. 17 and 18, the processor 400 may use the parking space-centered SVM image to output an operation process when using a remote smart parking assist (RSPA) function, or may fill a bottom surface (rectangular dotted box in FIG. 18) with a past image.

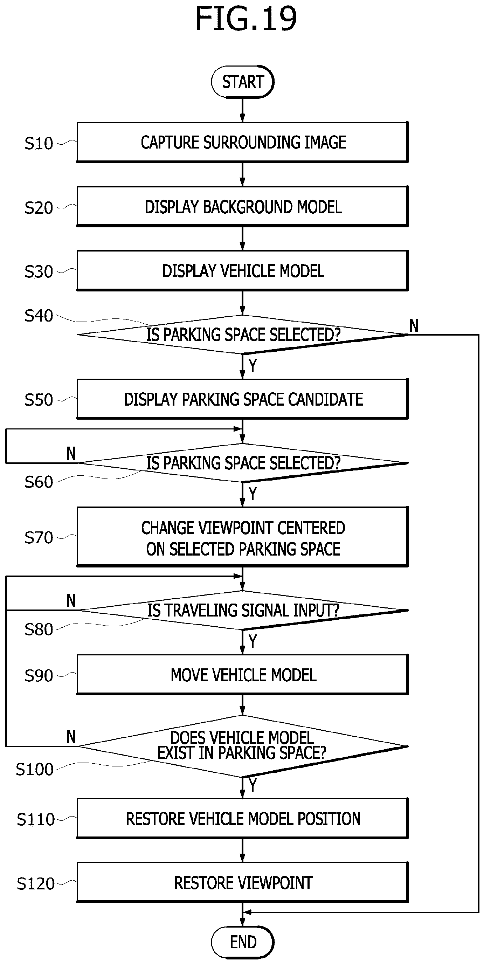

A parking assistance method in accordance with an embodiment of the present disclosure is described below with reference to FIG. 19.

FIG. 19 is a flowchart of a parking assistance method in accordance with an embodiment of the present disclosure.

Referring to FIG. 19, the camera 100 may first capture a background image of an area in front of a vehicle, a background image of an area behind the vehicle, a background image of an area on the left side of the vehicle, and a background image of an area on the right side of the vehicle (S10), and input the captured images into the processor 400.

The processor 400 may generate an SVM image by synthesizing the background image of the area in front of the vehicle, the background image of the area behind the vehicle, the background image of the area on the left side of the vehicle, and the background image of the area on the right side of the vehicle, and display a background model and a vehicle model (S20 and S30).

The processor 400 may analyze the SVM image to search for parking spaces, thereby confirming whether the parking spaces exist (S40).

When the parking spaces exist, the processor 400 may display the searched parking spaces as parking space candidates (S50).

In such a case, the processor 400 may select a parking space candidate. The processor 400 may determine whether a parking space is selected from the above-mentioned parking space candidates (S60).

When the parking space is selected, the processor 400 may change and fix the viewpoint of the SVM image centered on the parking space selected by a user, and display the SVM image through the display unit 300 (S70).

Subsequently, when the user travels the vehicle, the traveling signal input unit 200 may input a traveling signal to the processor 400.

When the traveling signal input from the traveling signal input unit 200 is inputted (S80), the processor 400 may move the vehicle model in the parking image according to the input traveling signal (S90).

In such a case, the processor 400 may determine whether the vehicle model exists in the parking space (S100).

When it is determined in step S100 that the vehicle model exists in the parking space, the processor 400 may the SVM image to a vehicle-centered view by restoring the position and viewpoint of the vehicle model (S110 and S120).

In this way, the parking assistance apparatus and method in accordance with an embodiment of the present disclosure enable a user to easily ascertain the environment around a parking space and conveniently park without separate operation.

The term "unit" used in this specification may include a unit implemented with hardware, software, or firmware, and may be used interchangeably with terms such as logic, logic block, component, or circuit, for example. The "unit" may be a component configured as an integral part or a minimum unit or part of the component that performs one or more functions. For example, in accordance with an embodiment, the "unit" may be implemented in the form of an ASIC (Application-Specific Integrated Circuit).

Although the present disclosure has been described with reference to the embodiments illustrated in the drawings, the embodiments of the disclosure are for illustrative purposes only, and those skilled in the art will appreciate that various modifications and other equivalent embodiments are possible from the embodiments. Thus, the true technical scope of the present disclosure should be defined by the following claims.

## Claims

1. The parking assistance apparatus comprising:

   a display unit;
   a camera configured to capture surroundings of a vehicle;
   a traveling signal input unit configured to input a traveling signal of the vehicle; and
   a processor configured to generate a surround view monitor (SVM) image based on the image captured by the camera, to fix the SVM image to one viewpoint centered on a preset parking space, and to move a vehicle model within the SVM image with the viewpoint fixed.

2. The parking assistance apparatus according to claim 1, wherein the processor analyzes the SVM image to recognize parking space candidates, and receives a user's selection of any one of the recognized parking space candidates.

3. The parking assistance apparatus according to claim 2, wherein the processor displays the parking space candidate within the SVM image and receives the parking space by touch through the display unit.

4. The parking assistance apparatus according to any one of claims 1 to 3, wherein the processor places the parking space at a bottom center of the SVM image with the viewpoint fixed.

5. The parking assistance apparatus according to any one of claims 1 to 4, wherein the processor moves the vehicle model according to an actual traveling signal of the vehicle within the SVM image with the viewpoint fixed.

6. The parking assistance apparatus according to claim 5, wherein the traveling signal comprises at least one of a shift stage signal, a wheel signal, and a steering angle signal of the vehicle.

7. The parking assistance apparatus according to claim 6, wherein the processor sets a traveling direction based on the shift stage signal, calculates a movement distance by using the wheel signal, calculates a rotation angle by using the steering angle signal, and moves the vehicle model according to the traveling direction, the movement distance, and the rotation angle.

8. A parking assistance method comprising:

    generating, by a processor, a surround view monitor (SVM) image based on an image captured by a camera;
    fixing, by the processor, the SVM image to one viewpoint centered on a preset parking space; and
    moving, by the processor, a vehicle model within the SVM image with the viewpoint fixed.

9. The parking assistance method according to claim 8, wherein, in the generating of the SVM image, the processor analyzes the SVM image to recognize parking space candidates, and receives a user's selection of any one of the recognized parking space candidates.

10. The parking assistance method according to claim 8 or 9, wherein, in the generating of the SVM image, the processor places the parking space at a bottom center of the SVM image with the viewpoint fixed.

# FIG.1

# FIG.2

FIG.3

# FIG.4

# FIG.5

# FIG.6

# FIG.7

# FIG.8

# FIG.9

PLACE SPACE, WHERE VEHICLE IS MOVABLE FOR PARKING, AT TOP

SELECTED PARKING SPACE

VIEWPOINT

PLACE SELECTED PARKING SPACE AT LOWER CENTER

EP 4 660 972 A1

# FIG.10

# FIG.11

# FIG.12

x-AXIS ROTATION TRANSFORMATION

y-AXIS TRANSLATION TRANSFORMATION

z-AXIS ROTATION TRANSFORMATION

FIG.13

DESIGNATE VEHICLE STARTING POINT

FIG.14

# FIG.15

# FIG.16

# FIG.17

# FIG.18

# FIG.19

START

S10 — CAPTURE SURROUNDING IMAGE

S20 — DISPLAY BACKGROUND MODEL

S30 — DISPLAY VEHICLE MODEL

S40 — IS PARKING SPACE SELECTED? — N

Y

S50 — DISPLAY PARKING SPACE CANDIDATE

N — S60 — IS PARKING SPACE SELECTED?

Y

S70 — CHANGE VIEWPOINT CENTERED ON SELECTED PARKING SPACE

N — S80 — IS TRAVELING SIGNAL INPUT?

Y

S90 — MOVE VEHICLE MODEL

N — S100 — DOES VEHICLE MODEL EXIST IN PARKING SPACE?

Y

S110 — RESTORE VEHICLE MODEL POSITION

S120 — RESTORE VIEWPOINT

END

**EP 4 660 972 A1**

Europäisches
Patentamt

European
Patent Office

Office européen
des brevets

# EUROPEAN SEARCH REPORT

**Application Number**

EP 25 16 3156

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/054946 A1 (LEE JAEHO [KR] ET AL) 23 February 2017 (2017-02-23) * [0007],[0010],[0015],[0016],[0019],[0029], [0030],[0050],[0051],[0064],[0068],[0078], [0079],[0083],[0084],[0129]-[0132],[0148], [0172],[0173],[0188]; figures 2,3,12,15-18 * | 1-10 | INV. G06V20/58 G06V10/24 G06V10/94 B60R1/27 |
| X | US 2014/354452 A1 (OKUYAMA YOSHITAKA [JP]) 4 December 2014 (2014-12-04) * [0035],[0036],[0039],[0044],[0046],[0047], [0056],[0059],[0061],[0067],[0068],0071]-[ 0073],[0087],[0093]; figures 1-3,5 * | 1-10 | |

TECHNICAL FIELDS
SEARCHED      (IPC)

G06V
B60R

The present search report has been drawn up for all claims

| Place of search | Date of completion of the search | Examiner |
|---|---|---|
| The Hague | 15 June 2025 | Markaki, Vasiliki |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 16 3156

15-06-2025

| Patent document cited in search report | Publication date | Patent family member(s) | | Publication date |
|---|---|---|---|---|
| US 2017054946 A1 | 23-02-2017 | CN | 106467060 A | 01-03-2017 |
| | | EP | 3132974 A1 | 22-02-2017 |
| | | KR | 20170022508 A | 02-03-2017 |
| | | US | 2017054946 A1 | 23-02-2017 |
| US 2014354452 A1 | 04-12-2014 | CN | 103596812 A | 19-02-2014 |
| | | EP | 2724896 A1 | 30-04-2014 |
| | | JP | 5798392 B2 | 21-10-2015 |
| | | JP | 2013006548 A | 10-01-2013 |
| | | US | 2014354452 A1 | 04-12-2014 |
| | | WO | 2013002037 A1 | 03-01-2013 |

EPO FORM P0459

For more details about this annex : see Official Journal of the European Patent Office, No. 12/82